# FASCICULE DE BREVET EUROPEEN

(11) **EP 2 480 331 B1**
(45) Date de publication et mention de la délivrance du brevet: **10.10.2018**
(21) Numéro de dépôt: 10773646.4
(22) Date de dépôt: 22.09.2010
(51) Int. Cl.: B01J 35/00, B01J 35/10, B01J 37/00

(54) **MATERIAU PHOTOCATALYTIQUE ULTRA-POREUX, PROCEDE DE FABRICATION ET UTILISATIONS**
HOCHPORÖSES FOTOKATALYTISCHES MATERIAL, VERFAHREN ZUR SEINER HERSTELLUNG UND VERWENDUNG
ULTRA-POROUS PHOTOCATALYTIC MATERIAL, METHOD FOR THE MANUFACTURE AND THE USES THEREOF

(30) Priorité: 25.09.2009 FR 0904588
(43) Date de publication de la demande: 01.08.2012
(73) Titulaire: Université d'Aix-Marseille, 13284 Marseille Cedex 07 (FR); Faldes, 13970 Rousset (FR)
(72) Inventeur: ARNAUD D'AVITAYA, François, F-13009 Marseille (FR); SAFAROV, Viatcheslav, F-94240 L'Hay les Roses (FR); ZALATAREVICH, Nadzeya Alexandrovna, Minsk 220020 (BY)
(74) Mandataire: Gevers & Orès
(86) Numéro de dépôt international: PCT/FR2010/000634
(87) Numéro de publication internationale: WO 2011/036353

(56) Documents cités:
- WO-A1-03/092886
- JP-A- 2005 222 782
- LAZAROUK S K ET AL: "Nanoporous oxides of refractory metals: fabrication and properties", PHYSICA STATUS SOLIDI (C), WILEY - VCH VERLAG, BERLIN, DE LNKD- DOI:10.1002/PSSC.200780176, vol. 5, no. 12, 1 décembre 2008 (2008-12-01), pages 3690-3693, XP008121952, ISSN: 1610-1634 [extrait le 2008-09-24] cité dans la demande
- JUNG PARK ET AL: "Nanosize and Vitality: TiO2 Nanotube Diameter Directs Cell Fate", NANO LETTERS, ACS, WASHINGTON, DC, US LNKD- DOI:10.1021/NL070678D, vol. 7, no. 6, 13 juin 2007 (2007-06-13), pages 1686-1691, XP008122107, ISSN: 1530-6984 [extrait le 2007-05-16]

## Description

La présente invention concerne un procédé de fabrication de matériaux photocatalytiques ultra-poreux, les matériaux photocatalytiques ultra-poreux obtenus selon un tel procédé, ainsi que leurs utilisations pour produire de l'hydrogène, traiter les eaux usées et polluées, traiter l'air pollué, ou encore leur utilisation comme membranes catalytiques dans des piles à combustible. Enfin, un dernier objet de l'invention concerne des articles choisis parmi les dispositifs de production d'hydrogène, les vitres autonettoyantes et les murs anti-pollution.

La photocatalyse est un processus électronique naturel induit par l'absorption d'un rayonnement UV ou visible à la surface d'une substance, appelée photocatalyseur. En utilisant l'énergie lumineuse, les photocatalyseurs engendrent la formation de radicaux libres capables de décomposer par oxydo-réduction certaines substances organiques ou inorganiques présentes dans le milieu dans lequel ils sont plongés. Ainsi, le principal intérêt de la photocatalyse réside dans le fait que l'énergie nécessaire pour les réactions d'oxydo-réduction est fournie par absorption directe de la lumière, plutôt que par chauffage thermique.

Les photocatalyseurs utilisés sont des matériaux semi-conducteurs ayant une bande interdite (gap optique), typiquement comprise entre 3 et 4 eV, correspondant à une irradiation lumineuse dans la région spectrale du proche UV. L'absorption de photons d'énergie supérieure au gap optique conduit à la formation de paires électrons-trous au sein du semi-conducteur, ces porteurs de charges pouvant ensuite soit se recombiner suivant divers mécanismes, soit diffuser à la surface du semi-conducteur.

Ainsi, la réaction photocatalytique qui se produit à la surface d'un matériau semi-conducteur comprend plusieurs étapes :
- l'adsorption des réactifs à la surface du photocatalyseur,
- la formation de paires électrons-trous par absorption de photons issus de l'irradiation UV,
- la séparation des paires électrons-trous et leur migration à la surface du photocatalyseur,
- des réactions d'oxydation et de réduction des électrons et des trous avec d'autres espèces adsorbées, tels que des polluants, des pollens, des bactéries ou des virus, conduisant à la dégradation de ces espèces, et
- la désorption des produits de réaction.

La vitesse à laquelle les réactions de photocatalyse ont lieu dépend de l'intensité lumineuse, de la quantité de photocatalyseur (nombre et temps de vie des porteurs de charges) et de la durée du contact entre le semi-conducteur et les matières présentes dans le milieu dans lequel ils sont plongés.

Les photocatalyseurs les plus couramment utilisés sont des semi-conducteurs à large gap à base d'oxydes ou de soufre, tels que TiO₂, ZnO, CeO₂, ZrO₂, SnO₂, CdS, ZnS, le photocatalyseur le plus utilisé étant le dioxyde de titane (TiO₂) du fait de sa stabilité thermodynamique, de son absence de toxicité et de son faible coût.

Ainsi, l'oxygène actif provenant de la réaction photocatalytique est capable de décomposer et détruire :
- les composés organiques volatils (COV),
- les gaz NOx s'échappant des véhicules et usines,
- les bactéries, virus, microbes,
- les moisissures, algues, champignons,
- les allergènes, tels que les pollens et acariens,
- les odeurs humaines, animales et chimiques.

La photocatalyse est ainsi utilisée dans le domaine du traitement de l'eau, de l'air et de la désodorisation, mais aussi comme agent antibactérien. La photocatalyse peut également trouver des applications dans le domaine médical pour lutter contre les cellules infectées.

Dans l'industrie, le principe de la photocatalyse est également employé pour l'utilisation de verre autonettoyant, cette application étant associée à une seconde propriété du semi-conducteur irradié : la superhydrophilie. De part son revêtement microscopique spécial, un verre autonettoyant a la capacité de dégrader les salissures organiques et donc de rester propre plus longtemps qu'un verre ordinaire. Le procédé de fabrication des verres autonettoyants comprend une étape d'application, sur sa face extérieure, d'une couche photocatalytique spéciale à base de dioxyde de titane (TiO₂). La fonction autonettoyante de ces verres repose sur la conjugaison de deux propriétés des couches microscopiques déposées : la photocatalyse et la superhydrophilie. En effet, les propriétés hydrophiles de ce verre font que l'eau tombant sur la plaque de verre, lave le verre, au lieu de le laisser sale comme un verre ordinaire. Au lieu de tomber en gouttes sur le verre, l'eau forme progressivement un film qui, par gravité, finit par glisser le long du verre en le lavant. Ainsi, les verres autonettoyants permettent une réduction des coûts de nettoyage, mais aussi des impacts environnementaux car ils nécessitent une utilisation moindre de produits détergents.

Les matériaux photocatalytiques actuels sont principalement fabriqués selon des procédés sol-gel coûteux nécessitant l'utilisation de précurseurs (Srivastava et al., International Journal of Hydrogen Energy, Vol. 25, pp. 495-503, 2000).

Des photocatalyseurs de haute porosité ont été préparés à partir de matériaux composites constitués de titane et d'aluminium, le matériau composite déposé étant soumis à une anodisation électrochimique, l'oxyde d'aluminium formé étant ensuite éliminé par attaque d'une solution d'acide fort H₃PO₄ (5%) et CrO₃ (2%) à une température de 80°C, l'utilisation de bains d'acides concentrés étant très délicats à manipuler (Phys. Stat. Sol., No. 12, 3690-3693 (2008)). D'autre part, les températures de dépôt et de recuit thermique mises en oeuvre dans ce procédé ne permettent pas d'atteindre une activité photocatalytique suffisante.

Un autre inconvénient des méthodes connues de l'état de l'art résulte de la faible porosité et de la faible surface spécifique des photocatalyseurs obtenus, ces derniers présentant de fait une efficacité insuffisante, les rendements photocatalytiques de ces matériaux étant compris entre 0,5 et 3%.

Ainsi, le problème technique restant à résoudre par rapport à cet état de l'art consiste en la mise au point d'un photocatalyseur ayant une activité photocatalytique améliorée, une excellente adhésion au substrat et pouvant être appliqué en couches épaisses. Ce photocatalyseur doit également pouvoir être mis en oeuvre selon des procédés simples, économiques et présentant une bonne faisabilité industrielle.

Les matériaux photocatalytiques ultra-poreux de l'invention proposent de remédier à tous ces inconvénients, en répondant aux besoins et exigences suivantes :
- une excellente activité photocatalytique, les réactions qu'ils catalysent présentant des rendements pouvant être jusqu'à 10 fois supérieurs à ceux obtenus avec des photocatalyseurs classiques,
- une très bonne adhésion aux substrats sur lesquels ils sont appliqués, du fait de l'absence de contraintes mécaniques à l'interface substrat/métal réfractaire,
- l'absence de telles contraintes mécaniques permettant également l'application de couches très épaisses pouvant aller jusqu'à 100 µm d'épaisseur,
- une fabrication simplifiée et peu coûteuse, et
- une faisabilité industrielle (production à grande échelle) satisfaisante.

Afin d'assurer une activité photocatalytique optimale, les matériaux photocatalytiques de l'invention doivent présenter les caractéristiques suivantes :
- une très grande porosité, nécessaire pour obtenir une surface spécifique élevée,
- des pores ayant des parois de faible épaisseur, de manière à ce que tous les porteurs de charges générés puissent atteindre, avant de se recombiner, la zone de déplétion où ils seront séparés,
- une épaisseur suffisamment importante pour que tous les photons ayant une énergie supérieure au gap du semi-conducteur soient complètement absorbés.

Ainsi, le premier objet de l'invention est un procédé de fabrication d'un matériau photocatalytique ultra-poreux mettant en oeuvre un matériau composite constitué d'au moins un métal dont l'oxyde est un semi-conducteur et d'au moins un métale dont l'oxyde est un isolant.

Le matériau photocatalytique ultra-poreux obtenu selon le procédé de l'invention, présentant des pores dont les parois ont une très faible épaisseur, constitue également un objet de la présente invention.

Des objets supplémentaires concernent les diverses utilisations du matériau photocatalytiques ultra-poreux de l'invention.

Enfin, des articles constitués de matériaux photocatalytiques ultra-poreux tels que ceux de l'invention font également partis de l'invention.

Le premier objet de la présente invention est un procédé de fabrication d'un matériau photocatalytique ultra-poreux tel que défini en revendication 1.

La durée de l'étape finale de recuit thermique peut être comprise entre 5 et 30 minutes, et de préférence entre 10 et 15 minutes.

Au sens de la présente invention, on entend par métal réfractaire un métal dont l'oxyde est un semi-conducteur, et par métal d'apport non réfractaire un métal dont l'oxyde est un isolant. Plus précisément, l'oxyde de métal réfractaire est un oxyde pour lequel la séparation entre la bande de valence et la bande de conduction (ou bande interdite, aussi appelée gap optique) est supérieure à 2,5 eV, les deux conditions suivantes devant être remplies :
- le haut de la bande de valence est à une énergie inférieure au niveau HOMO (*Highest Occupied Molecular Orbital*) de la molécule à dissocier, et
- le bas de la bande de conduction est à une énergie supérieure au niveau LUMO (*Lowest Unoccupied Molecular Orbital*) de la molécule à dissocier.

L'oxydation peut être une étape d'oxydation thermique, chimique ou électrochimique.

L'élimination du métal d'apport non réfractaire est réalisée par attaque chimique sélective, de manière à ne pas altérer le métal réfractaire. Cette étape consiste à mettre en contact le substrat recouvert du matériau composite avec une solution acide ou basique, de préférence choisie parmi les solutions d'acide phosphorique (H₃PO₄), de carbonate de sodium (NaCO₃), de potasse (KOH), et d'hydroxyde de sodium (NaOH). Lorsque l'étape d'oxydation est réalisée après l'élimination du métal d'apport non réfractaire, on préférera utiliser :
- pour éliminer un métal d'apport non réfractaire à base d'aluminium : une solution d'acide phosphorique (H₃PO₄) ou de potasse (KOH),
- pour éliminer un métal d'apport non réfractaire à base de silicium : une solution de potasse (KOH) ou d'hydroxyde de sodium (NaOH).

La durée de l'étape d'élimination par attaque chimique sélective dépendra de l'épaisseur du matériau composite à attaquer. Pour des couches ayant une épaisseur comprise entre 2 et 5 µm, la durée de l'étape d'élimination sera de préférence inférieure à 2 minutes.

L'étape d'élimination par attaque chimique sélective est considérée achevée une fois que le métal d'apport non réfractaire n'est plus présent qu'à l'état de traces dans le matériau composite, c'est-à-dire à un taux en poids inférieur à 1%. On observe alors une modification de l'aspect de surface du matériau composite (changement de couleur du matériau).

Selon un mode de réalisation préféré, le procédé de l'invention peut comprendre les étapes définies en revendication 2.

Dans ce mode de réalisation particulier, l'étape d'oxydation (ii) est de préférence une étape d'oxydation électrochimique.

L'étape d'oxydation électrochimique consiste en une anodisation électrochimique du matériau composite, ledit matériau étant tout d'abord plongé dans une solution aqueuse d'acide à une concentration comprise entre 0,1 et 3 mol.L⁻¹, et de préférence à une concentration comprise entre 0,1 et 2 mol.L⁻¹. La solution aqueuse d'acide utilisée peut être une solution d'acide sulfurique (H₂SO₄), ou une solution d'acide oxalique (HOOC-COOH), ou une solution d'acide phosphorique (H₃PO₄), la solution d'acide phosphorique (H₃PO₄) étant la plus préférée. Une densité de courant comprise entre 1 et 15 mA.cm⁻², et de préférence comprise entre 1 et 10 mA.cm⁻², est ensuite appliquée sur le matériau jusqu'à atteindre un potentiel compris entre 70 et 250 V (la valeur du potentiel dépendra de la concentration de la solution aqueuse d'acide). La densité de courant est alors maintenue pendant une durée comprise entre 1 et 60 minutes, en fonction de l'épaisseur d'oxyde désirée. L'étape d'oxydation électrochimique peut avantageusement être réalisée à une température comprise entre 40 et 70°C.

Selon un autre mode de réalisation, le procédé de l'invention peut comprendre les étapes définies en revendication 3.

Dans ce mode de réalisation particulier, l'étape (iii') de traitement chimique oxydant ou de traitement thermique sous atmosphère oxydante peut être :
- soit une étape d'oxydation chimique, de préférence réalisée dans un bain oxydant à base d'H₂SO₄/H₂O₂ ou d'HCl/H₂O₂,
- soit une étape d'oxydation thermique, de préférence conduite à une température comprise entre 400 et 500°C, la température de l'étape (iii') devant être inférieure à la température de l'étape (iv') de recuit thermique. L'atmosphère oxydante peut être créée par introduction d'oxygène moléculaire O₂ à une pression comprise entre 100 mbar et 1 bar. La durée de l'étape (iii') est avantageusement comprise entre 10 et 60 minutes, et de préférence entre 10 et 30 minutes.

Selon encore un autre mode de réalisation, le procédé de l'invention peut comprendre les étapes définies en revendication 4.

Dans ce mode de réalisation particulier, l'atmosphère oxydante de l'étape (iv") peut être créée par introduction d'oxygène moléculaire O₂ à pression atmosphérique. La durée de l'étape (iv") est avantageusement comprise entre 10 et 60 minutes, et de préférence entre 15 et 30 minutes.

Le matériau composite mis en oeuvre lors de l'étape de dépôt peut comprendre un métal dont l'oxyde est semi-conducteur choisi parmi le titane, le tungstène, le niobium, le molybdène, et leurs mélanges, et un métal dont l'oxyde est un isolant choisi parmi l'aluminium, le silicium, et leur mélange, le métal dont l'oxyde est un isolantpouvant éventuellement être mélangé à du chrome, du tantale, du vanadium ou du rhénium. Les mélanges de métaux dont l'oxyde est semi-conducteur peuvent comprendre les couples de métaux suivants : titane/tungstène, titane/niobium et tungstène/niobium. De préférence, le matériau composite de l'invention est constitué d'un métal dont l'oxyde est semi-conducteur choisi parmi le titane ou le mélange titane/tungstène, et d'aluminium comme métal dont l'oxyde est un isolant.

Le pourcentage atomique de métal dont l'oxyde est semi-conducteur dans le matériau composite peut être compris entre 20 et 70%, et de préférence entre 40 et 60%. Si ce pourcentage est trop faible, on obtient un film poreux présentant de faibles performances mécaniques, et s'il est trop élevé, et la structure poreuse du matériau ne se forme pas (le métal dont l'oxyde est un isolantne se grave pas dans le matériau). Il est à noter que plus la proportion en métal d'apport dans le matériau composite est élevée, plus la porosité finale du matériau photocatalytique sera importante. Ainsi, c'est la proportion du métal dont l'oxyde est un isolantqui définit la morphologie finale du photocatalyseur.

Le substrat sur lequel le matériau composite est déposé est de préférence choisi parmi le verre, le métal, de préférence l'aluminium ou les feuilles de titane, les polymères, les céramiques et les matériaux semi-conducteurs. Les polymères utilisés doivent avoir une tenue à la température supérieure ou égale à 600°C ; il peut notamment s'agir de silicones. Il est à noter que dans le cas d'une oxydation électrochimique, les substrats isolants devront au préalable avoir été traités, par exemple par application d'une couche d'ITO (Indium Tin Oxide), de manière à les rendre conducteur.

Selon un mode de réalisation particulièrement avantageux, l'étape de dépôt du matériau composite est réalisée à une température comprise entre 50 et 150°C, et encore plus préférentiellement entre 80 et 120°C. De préférence, l'étape de dépôt est réalisée par pulvérisation cathodique, vaporisation thermique ou dépôt électrolytique. A cette température, la diffusion entre l'oxyde de métal dont l'oxyde est semi-conducteuret l'oxyde du métal dont l'oxyde est un isolant est trop faible, les coefficients de collage des deux espèces étant considérés comme unitaire. Il se forme alors une barrière de diffusion à l'interface des deux métaux oxydes, qui permet l'attaque sélective des métaux dont l'oxyde est un isolantconduisant à une porosité extrêmement élevée des matériaux photocatalytiques. Une température de dépôt trop faible, et notamment inférieure à 50°C, conduit à une adhésion insuffisante du matériau sur le substrat, tandis qu'une température trop élevée conduit à des tailles de pores et à une épaisseur de la taille des pores trop élevées.

Un autre objet de la présente invention concerne un matériau photocatalytique ultra-poreux à base d'au moins un oxyde de métal dont l'oxyde est semi-conducteur obtenu par le procédé de l'invention, ledit matériau photocatalytique comprenant des pores dont les parois ont une épaisseur inférieure ou égale à 10 nm, et de préférence comprise entre 1 et 7 nm.

Le diamètre moyen des pores est de préférence compris entre 10 et 60 nm.

Le diamètre des pores et l'épaisseur des parois des pores sont mesurées selon des techniques bien connues de l'homme du métier, comme par exemple par microscopie à balayage ou par microscopie en transmission.

De préférence, l'oxyde de métal dont l'oxyde est semi-conducteurconstituant le matériau photocatalytique de l'invention comprend au moins un oxyde de métal dont l'oxyde est semi-conducteur choisi parmi l'oxyde de titane, l'oxyde de tungstène, l'oxyde de niobium, l'oxyde de molybdène, et leurs mélanges. L'oxyde de métal dont l'oxyde est semi-conducteur peut également être un oxyde mixte choisi parmi les oxydes de titane/tungstène, titane/niobium et tungstène/niobium.

Le matériau composite de l'invention peut également comprendre un dopant choisi parmi le cuivre, le fer, le carbone et les métaux de transition tels que le cobalt, le nickel ou le zinc. Ces matériaux créent des niveaux électroniques dans la bande interdite de l'oxyde de métal dont l'oxyde est semi-conducteur, les photons de plus basse énergie (inférieure à 3 eV) pouvant alors être absorbés et participer à la formation des paires électrons-trous, nécessaires au processus photocatalytique. Ainsi, le matériau dopé obtenu peut alors absorber une plus grande partie du spectre solaire.

Le matériau photocatalytique de l'invention présente de manière avantageuse une porosité comprise entre 50 et 95%. La surface spécifique dudit matériau composite peut, quant à elle, être comprise entre 500 et 700 m².cm⁻³, et de préférence entre 600 et 700 m².cm⁻³. La porosité et la surface spécifique peuvent être déterminées par BET ou par pesée ou par isotherme d'absorption.

La porosité élevée des matériaux photocatalytiques obtenus s'expliquent par l'absence de démixion entre l'oxyde de métal dont l'oxyde est semi-conducteur et l'oxyde du métal dont l'oxyde est un isolant, l'attaque sélective de l'oxyde du métal dont l'oxyde est un isolantconduisant à un matériau ultra-poreux, dont la taille des pores est nanométrique, et présentant une grande surface spécifique.

L'absence de contraintes mécaniques à l'interface substrat/photocatalyseur permet la fabrication de couches d'oxydes de larges épaisseurs. Ainsi, l'épaisseur du matériau photocatalytique de l'invention peut avantageusement être supérieure à 2 µm, de préférence supérieure à 5 µm, et encore plus préférentiellement comprise entre 8 et 100 µm, sans qu'il y ait destruction partielle ou totale de la couche d'oxydes.

Un autre objet de l'invention concerne les diverses utilisations du matériau photocatalytique de l'invention. Ses utilisations sont les suivantes :
- la production d'hydrogène,
- le traitement des eaux usées et polluées,
- le traitement de l'air pollué,
- la fabrication de vitres autonettoyantes.

Le matériau photocatalytique de l'invention peut également être utilisé comme membrane catalytique pour piles à combustible.

Enfin, le dernier objet de la présente invention concerne les articles choisis parmi les dispositifs de production d'hydrogène, les vitres autonettoyantes et les murs anti-pollution comprenant au moins un matériau photocatalytique ultra-poreux tel que défini selon l'invention.

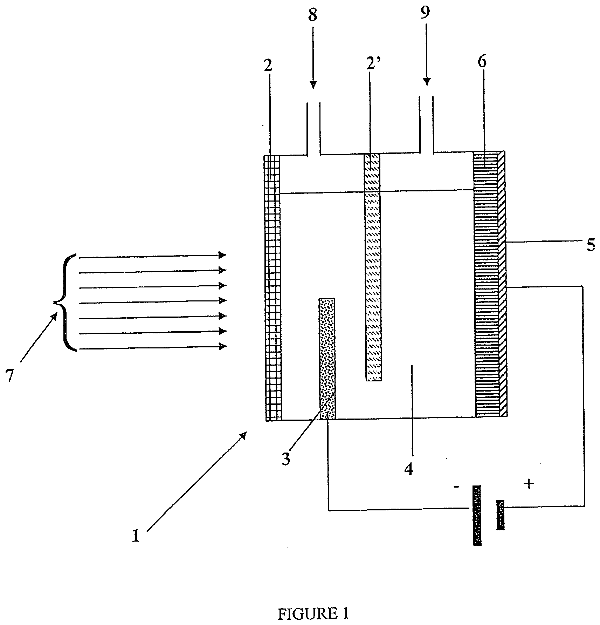

Outre les dispositions qui précédent, l'invention comprend encore d'autres dispositions qui ressortiront du complément de description qui suit, qui se rapporte à des exemples mettant en évidence les excellentes propriétés des matériaux photocatalytiques de l'invention, ainsi qu'à la Figure 1 annexée qui illustre un dispositif de production d'hydrogène comprenant une couche de matériau photocatalytique selon l'invention.

### EXEMPLE :

### Exemple 1 :

Une cellule de production d'hydrogène notée (1) sur la Figure 1 comprenant deux parois en verre notés (2) et (2') sur la Figure 1 a été préparée. La cellule (1) est divisée en deux compartiments, séparés l'un de l'autre par la paroi en verre (2'). Dans cette cellule, la cathode notée (3) sur la Figure 1, et située entre les parois en verre (2) et (2'), est constituée d'un fil de platine, plongé dans l'électrolyte (eau acidulée) noté (4) sur la Figure 1. Ainsi, le compartiment défini entre les parois (2) et (2') est appelé compartiment cathodique, et le compartiment défini entre la paroi (2') et le substrat noté (5) sur la Figure 1, qui joue le rôle d'anode, est appelé compartiment anodique.

Une couche de matériau composite, précurseur du matériau photocatalytique noté (6) sur la Figure 1, de 3 µm d'épaisseur est déposée sur le substrat (5), ledit substrat étant ici une plaque de silicium (diamètre 100 mm, épaisseur 500 µm, résistivité dans la gamme 10-20 Q.cm), selon le procédé suivant :
- dépôt d'un mélange d'aluminium (80% atomique) et de titane (20% atomique), réalisé par pulvérisation cathodique magnétron d'une cible d'aluminium partiellement recouverte de feuilles de titane, pour former le matériau composite précurseur du matériau photocatalytique (6), ledit dépôt étant réalisé à une température de 100°C,
- anodisation électrochimique du matériau composite dans une solution d'acide oxalique à 0,5 mol.L⁻¹, sous une densité de courant comprise entre 2 et 5 mA.cm⁻² (régime galvanostatique) jusqu'à un potentiel de formation de 100-150 V. La densité de courant est ensuite maintenue pendant 30 à 40 minutes (régime potentiostatique),
- élimination de l'oxyde d'aluminium formé par attaque chimique sélective, par mise en contact avec une solution d'acide phosphorique H₃PO₄ à 2 mol.L⁻¹ pendant 1 à 2 minutes,
- rinçage à l'eau déionisée et séchage de l'échantillon,
- recuit thermique du matériau composite à une température de 650°C, pendant 10 à 15 minutes.

On obtient un matériau photocatalytique (6) qui présente les propriétés suivantes :
- une taille de pores mesurée par microscopie en transmission de 40-60 nm,
- une épaisseur des parois des pores mesurée par microscopie en transmission de 4-8 nm,
- une porosité mesurée par BET de 70-80%, et
- une surface spécifique déterminée par isotherme d'adsorption de 600 m².cm⁻³.

La cellule (1) a ensuite été irradiée sous un faisceau lumineux noté (7) sur la Figure 1, d'environ 0,5*AM1,5 (AM1,5 = standard correspondant à l'éclairement solaire), pour produire de l'hydrogène. Une densité de courant de 10 mA.cm⁻² et une tension de 0,8 V sont appliquées. De l'hydrogène est produit dans le compartiment cathodique, et de l'oxygène est produit dans le compartiment anodique. On mesure la quantité d'hydrogène produit par mesure de la variation de la hauteur d'eau présente dans une éprouvette graduée remplie d'eau, l'hydrogène étant amené dans cette éprouvette (non représentée) via un tube noté (8) sur la Figure 1 raccordé au compartiment cathodique. L'oxygène est évacué du compartiment anodique via le tube noté (9) sur la Figure 1. On obtient en 30 minutes 0,7 cm³ d'hydrogène par cm². Cette quantité correspond à une production de 28L d'hydrogène par heure et par mètre carré, c'est-à-dire à un rendement énergétique proche de 10%.

### Exemple 2 :

Une série d'échantillons a été réalisée en déposant par pulvérisation cathodique sur un substrat en titane, à une température de 300°C, un matériau composite comprenant un pourcentage atomique de titane de 50% et un pourcentage atomique d'aluminium de 50%. L'épaisseur du film déposée est de 1 µm.

Une autre série d'échantillons a été réalisée en déposant par pulvérisation cathodique également sur un substrat en titane, à une température de 100°C, un film ayant la même épaisseur (1 µm) d'un matériau composite ayant la même composition que précédemment.

Les deux séries d'échantillons ont ensuite été modifiées selon le même protocole, en subissant :
- une étape d'anodisation électrochimique dans une solution d'acide sulfurique H₂SO₄ diluée (10% en volume, soit environ 2 mol.L⁻¹), sous une densité de courant de 10 mA.cm⁻², puis
- une étape d'élimination de l'oxyde d'aluminium Al₂O₃ formé par attaque chimique sélective, par mise en contact avec une solution d'acide phosphorique H₃PO₄ diluée (50% en volume, soit environ 7 mol.L⁻¹), à une température de 50°C.

Les deux séries d'échantillons ont ensuite subi respectivement un recuit thermique à 500°C, puis un recuit thermique à 650°C, pendant une durée de 20 minutes.

Après le recuit thermique à 650°C, on obtient des matériaux photocatalytiques présentant les propriétés suivantes :
- pour la 1^{ère} série :
   - une épaisseur des parois des pores mesurée par microscopie en transmission de 10-20 nm,
   - une porosité mesurée par BET de 52-53%, et
   - une surface spécifique déterminée par isotherme d'adsorption de 400 2 -3 m .cm ,
- pour la 2^{ème} série :
   - une épaisseur des parois des pores mesurée par microscopie en transmission de 1-7 nm,
   - une porosité mesurée par BET de 57-59%, et
   - une surface spécifique déterminée par isotherme d'adsorption de 600 2 -3 m .cm ,

L'activité photocatalytique des deux séries d'échantillons a été évaluée en mesurant le photocourant produit par une source de photons UV (environ 15 mW.cm⁻²). Toutes les mesures ont été réalisées au déplacement zéro (sans aucune source de tension externe).

On observe une augmentation de l'efficacité photocatalytique de 100% pour la 2^{ème} série d'échantillons.

Pour les échantillons recuit à 500°C, on a mesuré les densités de courant suivantes :
- 1^{ère} série : 10 µA.cm⁻²,
- 2^{ème} série : 20 µA.cm⁻².

Pour les échantillons recuit à 650°C, on a mesuré les densités de courant suivantes :
- 1^{ère} série : 12 µA.cm⁻²,
- 2^{ème} série : 25 µA.cm⁻².

Le recuit à une température de 650°C augmente donc de 20% l'activité photocatalytique des matériaux. Cette amélioration s'explique par une meilleure cristallisation des échantillons, et par une augmentation de la phase anatase.

Lorsque le recuit est réalisé à une température de 700°C, on observe une altération de l'adhésion du film (décollement de la couche).

### Exemple 3 :

Une série d'échantillons a été réalisée en déposant par pulvérisation cathodique sur un substrat en titane, à une température de 300°C, un matériau composite comprenant un pourcentage atomique de titane de 50% et un pourcentage atomique d'aluminium de 50%. L'épaisseur du film déposée est de 1 µm.

Une autre série d'échantillons a été réalisée en déposant par pulvérisation cathodique également sur un substrat en titane, à une température de 100°C, un film ayant la même épaisseur (1 µm) d'un matériau composite ayant la même composition que précédemment.

Les deux séries d'échantillons ont ensuite été modifiées selon le même protocole, par trempage dans une solution comprenant 150 mL d'acide acétique CH₃COOH à 100%, 30 mL d'acide nitrique HNO₃ à 65%, 760 mL d'acide phosphorique H₃PO₄ à 80% et 30 mL d'eau, les échantillons étant maintenus dans cette solution pendant 15 minutes, à une température de 35°C ± 5°C.

Les deux séries d'échantillons ont ensuite subi respectivement un recuit thermique à 500°C, puis un recuit thermique à 650°C, sous atmosphère oxydante à pression atmosphérique, pendant une durée de 30 minutes. Pour les échantillons recuit à 500°C, on a mesuré les densités de courant suivantes :
- 1^{ère} série : 9 µA.cm⁻²,
- 2^{ème} série : 19 µA.cm⁻².

Pour les échantillons recuit à 650°C, on a mesuré les densités de courant suivantes :
- 1^{ère} série : 11 µA.cm⁻²,
- 2^{ème} série : 24 µA.cm⁻².

Le recuit à une température de 650°C augmente donc de 20% l'activité photocatalytique des échantillons.

## Revendications

1. Procédé de fabrication d'un matériau photocatalytique ultra-poreux **caractérisé en ce qu'**il comprend :
- une étape de dépôt sur un substrat, à une température comprise entre 50 et 250°C, d'un matériau composite constitué d'au moins un métal dont l'oxyde est un semi-conducteur et d'au moins un métal dont l'oxyde est un isolant,
- une étape ultérieure d'élimination du métal dont l'oxyde est un isolant, ledit procédé comprenant également une étape finale de recuit thermique à une température supérieure ou égale à 600°C, et de préférence supérieure ou égale à 650°C, ainsi qu'une étape d'oxydation pouvant être réalisée soit avant, soit après, l'étape d'élimination du métal dont l'oxyde est un isolant, soit simultanément à l'étape de recuit thermique.

2. Procédé selon la revendication 1 **caractérisé en ce qu'**il comprend les étapes suivantes :
(i) un dépôt sur un substrat, à une température comprise entre 50 et 250°C, d'un matériau composite constitué d'au moins un métal dont l'oxyde est un semi-conducteur et d'au moins un métal dont l'oxyde est un isolant,
(ii) une oxydation du matériau composite,
(iii) une élimination par attaque chimique sélective de l'oxyde de métal dont l'oxyde est un isolant obtenu lors de l'étape (ii),
(iv) un recuit thermique à une température supérieure ou égale à 600°C, et de préférence supérieure ou égale à 650°C.

3. Procédé selon la revendication 1 **caractérisé en ce qu'**il comprend les étapes suivantes :
(i') un dépôt sur un substrat, à une température comprise entre 50 et 250°C, d'un matériau composite constitué d'au moins un métal dont l'oxyde est un semi-conducteur et d'au moins un métal dont l'oxyde est un isolant,
(ii') une élimination par attaque chimique sélective du métal dont l'oxyde est un isolant obtenu lors de l'étape (i'),
(iii') un traitement chimique oxydant ou un traitement thermique sous atmosphère oxydante,
(iv') un recuit thermique à une température supérieure ou égale à 600°C, et de préférence supérieure ou égale à 650°C.

4. Procédé selon la revendication 1 **caractérisé en ce qu'**il comprend les étapes suivantes :
(i") un dépôt sur un substrat, à une température comprise entre 50 et 250°C, d'un matériau composite constitué d'au moins un métal dont l'oxyde est un semi-conducteur et d'au moins un métal dont l'oxyde est un isolant,
(ii") une élimination par attaque chimique sélective du métal dont l'oxyde est un isolant obtenu lors de l'étape (i'),
(iv") un recuit thermique sous atmosphère oxydante à une température supérieure ou égale à 600°C, et de préférence supérieure ou égale à 650°C.

5. Procédé selon l'une des revendications 1 à 4 **caractérisé en ce que** l'étape de dépôt du matériau composite est réalisée à une température comprise entre 50 et 150°C, par pulvérisation cathodique, vaporisation thermique ou dépôt électrolytique.

6. Procédé selon l'une des revendications 1 à 5 **caractérisé en ce que** le métal dont l'oxyde est un semi-conducteur est choisi parmi le titane, le tungstène, le niobium, le molybdène, et leurs mélanges, et le métal dont l'oxyde est un isolant est choisi parmi l'aluminium, le silicium, ou leur mélange.

7. Procédé selon la revendication 6 **caractérisé en ce que** le métal dont l'oxyde est un semi-conducteur est choisi parmi le titane ou le mélange titane/tungstène, et le métal dont l'oxyde est un isolant est l'aluminium.

8. Procédé selon l'une des revendications 1 à 7 **caractérisé en ce que** le pourcentage atomique de métal dont l'oxyde est un semi-conducteur dans le matériau composite est compris entre 20 et 70%.

9. Procédé selon l'une des revendications 1 à 8 **caractérisé en ce que** l'étape d'élimination par attaque chimique sélective consiste à mettre en contact le substrat recouvert du matériau composite avec une solution acide ou basique, de préférence choisie parmi les solutions d'acide phosphorique (H₃PO₄), de carbonate de sodium (NaCO₃), de potasse (KOH), et d'hydroxyde de sodium (NaOH).

10. Procédé selon la revendication 2 **caractérisé en ce que** l'étape d'oxydation (ii) est une étape d'oxydation électrochimique réalisée en plongeant le matériau composite dans une solution aqueuse d'acide ayant une concentration comprise entre 0,1 et 3 mol.L⁻¹, à une température comprise entre 40 et 70°C, puis en appliquant une densité de courant comprise entre 1 et 15 mA.cm⁻² jusqu'à atteindre un potentiel compris entre 70 et 250 V.

11. Procédé selon la revendication 3 **caractérisé en ce que** l'étape (iii') de traitement chimique oxydant ou de traitement thermique sous atmosphère oxydante est :
- soit une étape d'oxydation chimique réalisée dans un bain oxydant à base d'H₂SO₄/H₂O₂ ou d'HCl/H₂O₂,
- soit une étape d'oxydation thermique réalisée à une température comprise entre 400 et 500°C, la température de l'étape (iii') devant être inférieure à la température de l'étape (iv') de recuit thermique, par introduction d'oxygène moléculaire O₂ à une pression comprise entre 100 mbar et 1 bar.

12. Procédé selon la revendication 4 **caractérisé en ce que** l'étape (iv") de recuit thermique sous atmosphère oxydante est réalisée par introduction d'oxygène moléculaire O₂ à pression atmosphérique.

13. Matériau photocatalytique ultra-poreux comprenant au moins un oxyde de métal dont l'oxyde est un semi-conducteur susceptible d'être obtenu par un procédé tel que défini selon l'une des revendications 1 à 12, **caractérisé en ce qu'**il comprend des pores dont les parois ont une épaisseur inférieure ou égale à 10 nm et **en ce qu'**il présente une surface spécifique comprise entre 500 et 700 m².cm⁻³.

14. Matériau photocatalytique ultra-poreux selon la revendication 13 **caractérisé en ce que** l'oxyde de métal dont l'oxyde est un semi-conducteur est choisi parmi l'oxyde de titane, l'oxyde de tungstène, l'oxyde de niobium, l'oxyde de molybdène, et leurs mélanges.

15. Matériau photocatalytique ultra-poreux selon l'une des revendications 13 ou 14 **caractérisé en ce qu'**il présente une surface spécifique comprise entre 600 et 700 m².cm⁻³.

16. Utilisation d'un matériau photocatalytique ultra-poreux tel que défini selon l'une des revendications 13 à 15 pour produire de l'hydrogène, traiter des eaux usées et polluées, traiter l'air pollué, fabriquer des vitres autonettoyantes, ou comme membrane catalytique pour piles à combustible

17. Article choisi parmi les dispositifs de production d'hydrogène, les vitres autonettoyantes et les murs anti-pollution **caractérisé en ce qu'**il comprend au moins un matériau photocatalytique ultra-poreux tel que défini selon l'une des revendications 13 à 15.

## Patentansprüche

1. Verfahren zur Herstellung eines hochporösen fotokatalytischen Materials, **dadurch gekennzeichnet, dass** es umfasst:
- einen Schritt des Abscheidens eines Verbundmaterials, bestehend aus mindestens einem Metall, von dem das Oxid ein Halbleiter ist, und aus mindestens einem Metall, von dem das Oxid ein Isolator ist, auf ein Substrat, bei einer Temperatur im Bereich von 50 und 250 °C,
- einen nachfolgenden Schritt des Entfernens des Metalls, von dem das Oxid ein Isolator ist, wobei das Verfahren ebenfalls einen finalen Schritt des thermischen Glühens bei einer Temperatur größer oder gleich 600 °C und vorzugsweise größer oder gleich 650 °C umfasst, sowie einen Oxidationsschritt, der entweder vor oder nach dem Schritt des Entfernens des Metalls, von dem das Oxid ein Isolator ist, durchgeführt werden kann, oder gleichzeitig mit dem Schritt des thermischen Glühens.

2. Verfahren nach Anspruch 1, **dadurch gekennzeichnet, dass** es die folgenden Schritte umfasst:
(i) ein Abscheiden eines Verbundmaterials, bestehend aus mindestens einem Metall, von dem das Oxid ein Halbleiter ist, und aus mindestens einem Metall, von dem das Oxid ein Isolator ist, auf ein Substrat, bei einer Temperatur im Bereich von 50 und 250 °C,
(ii) eine Oxidation des Verbundmaterials,
(iii) ein Entfernen, durch selektiven chemischen Angriff, des Oxids des Metalls, von dem das Oxid ein in Schritt (ii) erhaltener Isolator ist,
(iv) ein thermisches Glühen bei einer Temperatur größer oder gleich 600 °C und vorzugsweise größer oder gleich 650 °C.

3. Verfahren nach Anspruch 1, **dadurch gekennzeichnet, dass** es die folgenden Schritte umfasst:
(i') ein Abscheiden eines Verbundmaterials, bestehend aus mindestens einem Metall, von dem das Oxid ein Halbleiter ist, und aus mindestens einem Metall, von dem das Oxid ein Isolator ist, auf ein Substrat, bei einer Temperatur im Bereich von 50 und 250 °C,
(ii') ein Entfernen, durch selektiven chemischen Angriff, des Metalls, von dem das Oxid ein in Schritt (i') erhaltener Isolator ist,
(iii') eine chemische Oxidationsbehandlung oder eine thermische Behandlung in oxidierender Atmosphäre,
(iv') ein thermisches Glühen bei einer Temperatur größer oder gleich 600 °C und vorzugsweise größer oder gleich 650 °C.

4. Verfahren nach Anspruch 1, **dadurch gekennzeichnet, dass** es die folgenden Schritte umfasst:
(i") ein Abscheiden eines Verbundmaterials, bestehend aus mindestens einem Metall, von dem das Oxid ein Halbleiter ist, und aus mindestens einem Metall, von dem das Oxid ein Isolator ist, auf ein Substrat, bei einer Temperatur im Bereich von 50 und 250 °C,
(ii") ein Entfernen, durch selektiven chemischen Angriff, des Metalls, von dem das Oxid ein in Schritt (i') erhaltener Isolator ist,
(iv") ein thermisches Glühen in oxidierender Atmosphäre bei einer Temperatur größer oder gleich 600 °C und vorzugsweise größer oder gleich 650 °C.

5. Verfahren nach einem der Ansprüche 1 bis 4, **dadurch gekennzeichnet, dass** der Schritt des Abscheidens des Verbundmaterials bei einer Temperatur im Bereich von 50 und 150 °C durch Kathodenzerstäubung, thermische Verdampfung oder elektrolytisches Abscheiden durchgeführt wird.

6. Verfahren nach einem der Ansprüche 1 bis 5, **dadurch gekennzeichnet, dass** das Metall, von dem das Oxid ein Halbleiter ist, ausgewählt ist aus Titan, Wolfram, Niob, Molybdän und deren Mischungen, und das Metall, von dem das Oxid ein Isolator ist, ausgewählt ist aus der Gruppe bestehend aus Aluminium, Silicium oder deren Mischung.

7. Verfahren nach Anspruch 6, **dadurch gekennzeichnet, dass** das Metall, von dem das Oxid ein Halbleiter ist, ausgewählt ist aus Titan oder der Mischung Titan/Wolfram, und das Metall, von dem das Oxid ein Isolator ist, Aluminium ist.

8. Verfahren nach einem der Ansprüche 1 bis 7, **dadurch gekennzeichnet, dass** der Atomprozentsatz des Metalls, von dem das Oxid ein Halbleiter ist, in dem Verbundmaterial im Bereich von 20 und 70 % vorliegt.

9. Verfahren nach einem der Ansprüche 1 bis 8, **dadurch gekennzeichnet, dass** der Schritt des Entfernens durch selektiven chemischen Angriff daraus besteht, das mit dem Verbundmaterial bedeckte Substrat mit einer Säure- oder Basenlösung in Kontakt zu bringen, vorzugsweise ausgewählt aus den Lösungen von Phosphorsäure (H₃PO₄), Natriumcarbonat (NaCO₃), Kaliumhydroxid (KOH) und Natriumhydroxid (NaOH).

10. Verfahren nach Anspruch 2, **dadurch gekennzeichnet, dass** der Oxidationsschritt (ii) ein elektrochemischer Oxidationsschritt ist, durchgeführt durch Eintauchen des Verbundmaterials in eine wässrige Säurelösung, die eine Konzentration im Bereich von 0,1 und 3 mol.L⁻¹ aufweist, bei einer Temperatur im Bereich von 40 und 70 °C, danach durch Anlegen einer Stromdichte im Bereich von 1 und 15 mA.cm⁻² bis zum Erreichen eines Potentials im Bereich von 70 und 250 V.

11. Verfahren nach Anspruch 3, **dadurch gekennzeichnet, dass** der Schritt (iii') der chemischen Oxidationsbehandlung oder der thermischen Behandlung in oxidativer Atmosphäre Folgendes ist:
- entweder ein chemischer Oxidationsschritt, durchgeführt in einem oxidierenden Bad auf Basis von H₂SO₄/H₂O₂ oder von HCl/H₂O₂,
- oder einem thermischen Oxidationsschritt, durchgeführt bei einer Temperatur im Bereich von 400 und 500 °C, wobei die Temperatur des Schritts (iii') durch Einführung von molekularem Sauerstoff O₂ bei einem Druck im Bereich von 100 mbar und 1 bar unterhalb der Temperatur des Schritts (iv') des thermischen Glühens zu sein hat.

12. Verfahren nach Anspruch 4, **dadurch gekennzeichnet, dass** der Schritt (iv") des thermischen Glühens in oxidierender Atmosphäre durch Einführung von molekularem Sauerstoff O₂ bei Atmosphärendruck durchgeführt wird.

13. Hochporöses fotokatalytisches Material, umfassend mindestens ein Oxid eines Metalls, von dem das Oxid ein Halbleiter ist, der geeignet ist, durch ein Verfahren nach einem der Ansprüche 1 bis 12 erhalten zu werden, **dadurch gekennzeichnet, dass** es Poren umfasst, deren Wände eine Dicke kleiner oder gleich 10 nm aufweisen und dadurch, dass es eine spezifische Oberfläche im Bereich von 500 und 700 m².cm⁻³ aufweist.

14. Hochporöses fotokatalytisches Material nach Anspruch 13, **dadurch gekennzeichnet, dass** das Oxid eines Metalls, von dem das Oxid ein Halbleiter ist, ausgewählt ist aus Titanoxid, Wolframoxid, Nioboxid, Molybdänoxid und deren Mischungen.

15. Hochporöses fotokatalytisches Material nach einem der Ansprüche 13 oder 14, **dadurch gekennzeichnet, dass** es eine spezifische Oberfläche im Bereich von 600 und 700 m².cm⁻³ aufweist.

16. Verwendung eines hochporösen fotokatalytischen Materials nach einem der Ansprüche 13 bis 15 zum Herstellen von Wasserstoff, Behandeln von Abwässern und verschmutzten Wässern, Behandeln von verschmutzter Luft, Fertigen von selbstreinigenden Scheiben oder als katalytische Membran für Brennstoffzellen

17. Artikel, ausgewählt aus Vorrichtungen zur Herstellung von Wasserstoff, von selbstreinigenden Scheiben und Mauern gegen Verschmutzung, **dadurch gekennzeichnet, dass** er mindestens ein hochporöses fotokatalytisches Material nach einem der Ansprüche 13 bis 15 umfasst.

## Claims

1. Method for manufacturing an ultra-porous photocatalytic material, **characterised in that** it comprises:
- a step of depositing on a substrate, at a temperature of between 50 and 250 °C, a composite material consisting of at least one metal the oxide of which is a semiconductor, and at least one metal the oxide of which is an insulator,
- a subsequent step of eliminating the metal the oxide of which is an insulator, said method also comprising a final step of thermal annealing at a temperature greater than or equal to 600 °C, preferably greater than or equal to 650 °C, as well as an oxidation step that can be carried out either before or after the step of eliminating the metal the oxide of which is an insulator, or simultaneously with the thermal annealing step.

2. Method according to claim 1, **characterised in that** it comprises the following steps:
(i) deposition on a substrate, at a temperature between 50 and 250 °C, of a composite material consisting of at least one metal the oxide of which is a semiconductor and at least one metal the oxide of which is an insulator,
(ii) oxidation of the composite material,
(iii) elimination, by selective chemical attack, of the metal oxide the oxide of which is an insulator obtained during step (ii),
(iv) thermal annealing at a temperature greater than or equal to 600 °C, preferably greater than or equal to 650 °C.

3. Method according to claim 1, **characterised in that** it comprises the following steps:
(i') deposition on a substrate, at a temperature between 50 and 250 °C, of a composite material consisting of at least one metal the oxide of which is a semiconductor and at least one metal the oxide of which is an insulator,
(ii') elimination, by selective chemical attack, of the metal the oxide of which is an insulator obtained during step (i'),
(iii') oxidising chemical treatment or heat treatment under oxidising atmosphere,
(iv') thermal annealing at a temperature greater than or equal to 600 °C, preferably greater than or equal to 650 °C.

4. Method according to claim 1, **characterised in that** it comprises the following steps:
(i") deposition on a substrate, at a temperature between 50 and 250 °C, of a composite material consisting of at least one metal the oxide of which is a semiconductor and at least one metal the oxide of which is an insulator,
(ii") elimination, by selective chemical attack, of the metal the oxide of which is an insulator obtained during step (i'),
(iv") thermal annealing under oxidising atmosphere at a temperature greater than or equal to 600 °C, preferably greater than or equal to 650 °C.

5. Method according to any of claims 1 to 4, **characterised in that** the step of depositing the composite material is carried out at a temperature between 50 and 150 °C, by cathodic sputtering, thermal vaporisation or electrolytic deposition.

6. Method according to any of claims 1 to 5, **characterised in that** the metal the oxide of which is a semiconductor is chosen from titanium, tungsten, niobium, molybdenum and mixtures thereof, and the metal the oxide of which is an insulator is chosen from aluminium, silicon or a mixture thereof.

7. Method according to claim 6, **characterised in that** the metal the oxide of which is a semiconductor is chosen from titanium or the titanium/tungsten mixture, and the metal the oxide of which is an insulator is aluminium.

8. Method according to any of claims 1 to 7, **characterised in that** the atomic percentage of metal the oxide of which is a semiconductor in the composite material is between 20 and 70 %.

9. Method according to any of claims 1 to 8, **characterised in that** the step of elimination by selective chemical attack consists of putting the substrate covered with the composite material in contact with an acid or basic solution, preferably chosen from the solutions of phosphoric acid (H₃PO₄), sodium carbonate (NaCO₃), potash (KOH), and sodium hydroxide (NaOH).

10. Method according to claim 2, **characterised in that** the oxidation step (ii) is an electrochemical oxidation step carried out by immersing the composite material in an aqueous acid solution having a concentration of between 0.1 and 3 mol.l⁻¹, at a temperature of between 40 and 70 °C, and then applying a current density of between 1 and 15 mA.cm⁻² until a potential of between 70 and 250 V is reached.

11. Method according to claim 3, **characterised in that** the step (iii') of oxidising chemical treatment or heat treatment under oxidising atmosphere is:
- either a chemical oxidation step carried out in an oxidising bath based on H₂SO₄/H₂O₂ or of HCl/H₂O₂,
- or a thermal oxidation step carried out at a temperature of between 400 and 500 °C, the temperature of step (iii') having to be less than the temperature of the thermal annealing step (iv'), by introducing molecular oxygen O₂ at a pressure of between 100 mb and 1 bar.

12. Method according to claim 4, **characterised in that** the step (iv") of thermal annealing under oxidising atmosphere is carried out by introducing molecular oxygen O₂ at atmospheric pressure.

13. Ultra-porous photocatalytic material comprising at least one metal oxide the oxide of which is a semiconductor able to be obtained by a method as defined according to any of claims 1 to 12, **characterised in that** it comprises pores, the walls of which have a thickness of less than or equal to 10 nm and **in that** it has a specific surface of between 500 and 700 m².cm⁻³.

14. Ultra-porous photocatalytic material according to claim 13, **characterised in that** the metal oxide the oxide of which is a semiconductor is chosen from titanium oxide, tungsten oxide, niobium oxide, molybdenum oxide and mixtures thereof.

15. Ultra-porous photocatalytic material according to claim 13 or claim 14, **characterised in that** it has a specific surface of between 600 and 700 m².cm⁻³.

16. Use of an ultra-porous photocatalytic material as defined according to any of claims 13 to 15 for producing hydrogen, treating waste and polluted water, treating polluted air or manufacturing self-cleaning windows, or as a catalytic membrane for fuel cells.

17. Article chosen from the devices for producing hydrogen, self-cleaning windows and anti-pollution walls, **characterised in that** it comprises at least one ultra-porous photocatalytic material as defined according to any of claims 13 to 15.
